# EUROPEAN PATENT APPLICATION

(11) **EP 1 679 598 A2**
(43) Date of publication of application: **12.07.2006**
(21) Application number: 06300015.2
(22) Date of filing: 09.01.2006
(51) Int. Cl.: G06F 11/10

(54) **Memory addressing error protection systems and methods**

(30) Priority: 07.01.2005 US 31433
(71) Applicant: Alcatel, 75008 Paris (FR)
(72) Inventor: Driediger, Steve, Kanata, Ontario K2M 1S2 (CA)
(74) Representative: Hervouet, Sylvie

(57) **Abstract**

Systems and methods for protecting against memory addressing errors are disclosed. When data is to be written to a storage location in a memory, address protection information is calculated based on an address of the storage location, and combined address and data protection information is calculated based on both the address protection information and the data. The data and the combined address and data protection information are stored in the storage location. During a read operation, data and combined address and data protection information are retrieved from a storage location at a read address. Address protection information is recalculated based on the address from which data is to be read, and an addressing error is detected where the recalculated address protection information does not match original address protection information upon the basis of which the retrieved combined address and data protection information was calculated.

## Description

### Field of the Invention

This invention relates generally to electronic systems and, in particular, to detecting memory addressing errors in electronic systems.

### Background

Error checking in conjunction with memory device access operations has traditionally been limited to checking for data errors. However, in an effort to pursue maximum system reliability and availability in such electronic systems as communication equipment, with respect to so-called "5-9's" carrier grade targets for instance, the need to detect all types of electronic system error, including addressing errors, has become more important.

One example of a known technique which protects against memory addressing errors involves calculating address protection bits over a memory write address and storing these bits in memory on each write operation. On each read operation, similar address protection bits are calculated over the memory read address and then compared against those stored in memory. An error alarm is raised if these address protection bits do not match. The significant disadvantage of this particular solution is that resources in the memory are required to store the address protection bits.

### Summary of the Invention

In view of the foregoing, effective techniques for protecting against memory addressing errors in electronic systems, detecting such memory addressing errors, or both, are needed. Memory addressing error protection or detection may be particularly desirable to enhance reliability of communication equipment such as packet switches or routers for instance and, more generally, computers and other types of electronic systems and devices.

According to one aspect of the invention, a memory addressing error protection system is provided, and includes a data input for receiving data to be stored in a memory, an address input for receiving an address of a storage location in the memory in which the data is to be stored, and an error protection module coupled to the data input and the address input. The error protection module calculates address protection information based on the address, calculates combined address and data protection information based on both the address protection information and the data, and outputs the data and the combined address and data protection information for storage in the storage location.

A memory addressing error protection method is also provided and includes operations of receiving data to be stored in a memory and an address of a storage location in the memory in which the data is to be stored, calculating address protection information based on the address, calculating combined address and data protection information based on both the address protection information and the data, and outputting the data and the combined address and data protection information for storage in the storage location.

A memory addressing error detection system provided in accordance with another aspect of the invention includes a memory interface for transferring information between the addressing error detection system and a memory, an address input for receiving an address of a storage location in the memory from which data is to be read, and an error protection module, coupled to the address input and the memory interface. The error protection module receives through the address input an address of a storage location in the memory from which data is to be read. The error protection module also receives, through the memory interface, data and combined address and data protection information retrieved from a storage location at a read address in the memory. The combined address and data protection information was calculated based on the data and on the original address protection information, and the original address protection information was calculated based on a write address of a storage location in the memory in which the data was to be written. The error protection module also recalculates address protection information based on the address from which data is to be read, and determines, using the received data and the combined address and data protection information, whether an addressing error has occurred based on whether the recalculated address protection information matches the original address protection information.

A related memory addressing error detection method involves receiving an address of a storage location in a memory from which data is to be read, receiving data and combined address and data protection information retrieved from a storage location at a read address in the memory, the combined address and data protection information having been calculated based on the data and on original address protection information, and the original address protection information having been calculated based on a write address of a storage location in the memory in which the data was to be written, recalculating address protection information based on the address from which data is to be read, and determining, using the received data and the combined address and data protection information, whether an addressing error has occurred based on whether the recalculated address protection information matches the original address protection information.

A data structure is also provided according to yet another aspect of the invention. The data structure, which is stored at a storage location having an address, includes a data field storing data, and a protection information field storing combined address and data protection information. As above, the combined address and data protection information was calculated based on the data and on original address protection information, and the original address protection information was calculated based on a write address of a storage location in the medium in which the data was to be written. The protection information field enables an addressing error to be detected by determining whether address protection information generated for the read address matches the original address protection information.

Address protection information may be an address itself, or be calculated using a linear block code. In some embodiments, the combined address and data protection information is calculated using a different linear block code.

Other aspects and features of the present invention will become apparent to those ordinarily skilled in the art upon review of the following description of specific illustrative embodiments thereof.

### Brief Description of the Drawings

Examples of embodiments of the invention will now be described in greater detail with reference to the accompanying drawings, in which:
Fig. 1 is a block diagram of an electronic device implementing a conventional data protection technique;
Fig. 2 is a block diagram of an illustrative example electronic device implementing an embodiment of the invention;
Fig. 3 is a block diagram of an error protection module according to an embodiment of the invention;
Figs. 4 and 5 are flow diagrams of methods in accordance with still further embodiments of the invention; and
Fig. 6 is a block diagram of a data structure according to an embodiment of the invention.

### Detailed Description of Preferred Embodiments

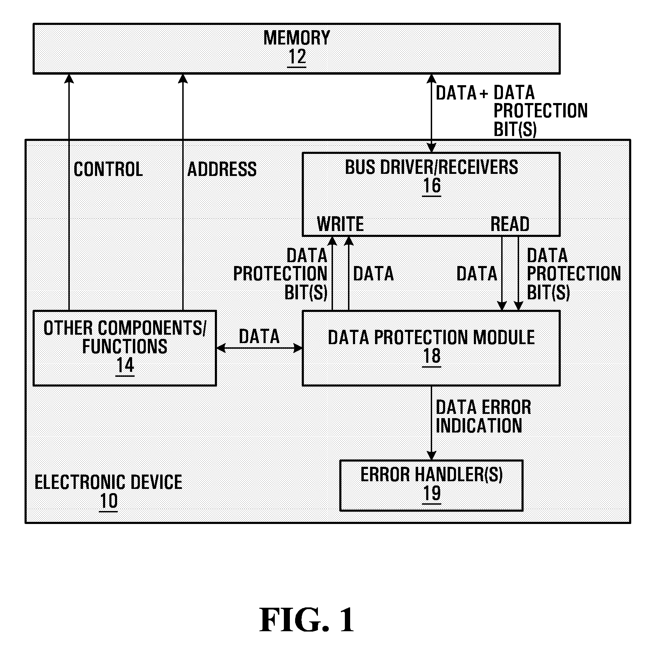

As described briefly above, error checking in conjunction with memory devices primarily involves checking for data errors. Fig. 1 is a block diagram of an electronic device implementing a conventional data protection technique. The electronic device 10 includes bus drivers and receivers 16, a data protection module 18, one or more error handlers 19, and other components or functions generally designated 14. The electronic device 10 is connected to a memory 12, through a bus in an electronic system for instance. Those skilled in the art will be familiar with the components shown in Fig. 1 and various electronic systems and devices which may include these and possibly other components.

The electronic device 10, illustratively an Application Specific Integrated Circuit (ASIC) or Field Programmable Gate Array (FPGA), interfaces with the memory 12 using address, control, and data signals carried on respective connections between the electronic device 10 and the memory 12. Various components or functions, including software functions performed by a processor, for example, may access the memory 12, and have been generally shown in Fig. 1 at 14.

Data signals carry data words which are to be stored in or have been retrieved from the memory 12. Each of these data words includes data bits and one or more data protection bits. For example, where the memory 12 stores 36-bit data words, a data word could comprise 35 bits of data and one parity bit, or 29 bits of data and 7 error correction code (ECC) bits. Address signals provide read and write addresses for memory access operations, whereas control signals enable either a read operation or a write operation at any time.

During a memory write operation, data protection bits for each data word are generated from data bits by a protection function in the electronic device 10, represented by the data protection module 18, before the data word is supplied to bus drivers at 16. The bus drivers then provide the data word to the memory 12.

Likewise, bus receivers receive data signals during memory read operations and supply received data words to the data protection module 18. The data protection module 18 uses the data protection bits to determine whether an error affecting the data bits of a data word has occurred somewhere during the process of storing the data word to the memory 12 and retrieving it from the memory 12, and may provide an error signal or other data error indication to an error handler at 19. The data protection module 18 may also be able to correct errors in the retrieved data, if an appropriate ECC is employed.

The system of Fig. 1 provides error protection only for data. Even though errors in data which is read from the memory 12 may be detected and possibly corrected, the electronic device 10 does not have any assurance that read data was actually read from an intended address in the memory 12. Memory addressing errors cannot be detected by the data protection module 18.

According to one conventional addressing error protection scheme, data protection techniques are effectively extended to addresses, by calculating and storing address protection bits in memory. However, this type of protection requires additional memory space for address protection bits, which are generated for a particular memory address and are stored in the memory, with data and data protection bits, at that address.

Embodiments of the present invention provide improved techniques for protecting against and detecting memory addressing errors. The above additional storage problem is overcome by including address protection information with data when calculating data protection information. Consequently, address protection is embedded in the data protection, and therefore does not require additional storage over that already used for data protection, assuming that the addition of the address protection information with data does not require the use of more data protection bits. This is generally the case when only data error detection (without correction) is employed. Furthermore, this is often the case when data error correction is employed, since an error-correcting code is often able to correct a larger data word than is used for storing data.

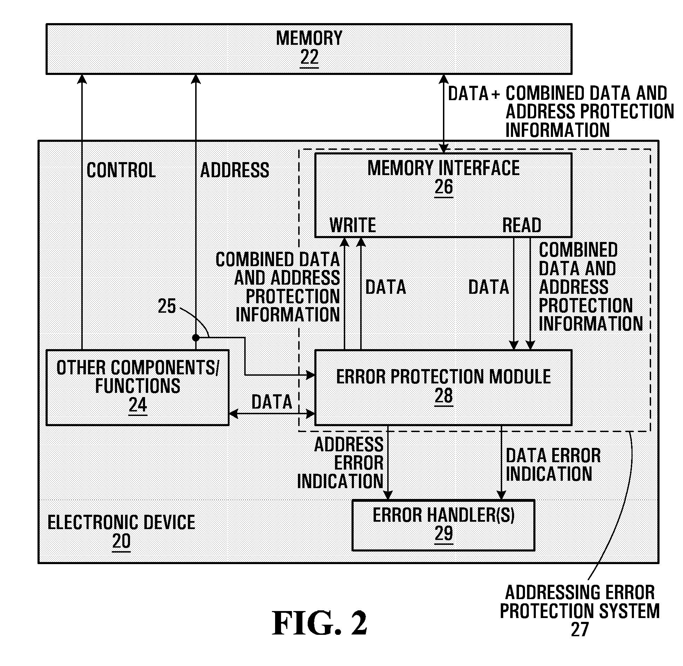

Fig. 2 is a block diagram of an illustrative example electronic device 20 implementing an embodiment of the invention. The electronic device 20 includes a memory interface 26, an error protection module 28, one or more error handlers 29, and other components or functions 24 which access a memory 22.

The memory 22, the other components or functions 24, and the error handler(s) 29 may be substantially the same as similarly labelled components in the electronic device 10. In some embodiments, the memory interface 26 is a bus interface including bus drivers and receivers as described above, although other types of memory interface for transferring information between the addressing error protection system 27 and the memory 22 are also contemplated. The addressing error protection system 27 provides memory addressing error protection in addition to data protection, as described in further detail below.

One primary difference between the electronic devices 10, 20 is the input of an address to the error protection module 28, as shown at 25. Thus, in the electronic device 20, the addressing error protection system 27 includes an address input, represented at 25 in Fig. 2, for receiving an address of a storage location in the memory 22 in which the data is to be stored. Data to be stored at the storage location is also received from other components or functions 24 on a data input, shown as a data line in Fig. 2. For a read operation, a read address is received on the address input 25 and at least data which is read from the memory 22 is output through the data lines to a component or function which initiated the read operation.

In accordance with embodiments of the invention, the error protection module 28 is involved in write operations, read operations, or both, depending upon the functions supported in the electronic device 20, for example. Although many electronic devices perform both write and read operations, it is possible that an electronic device may perform only one of these functions. It is also possible that an electronic device may access data which was written to a memory by a different device. Accordingly, it should be understood that addressing error protection may be implemented substantially independently for write and read operations, which are thus described separately below.

When a memory write operation is initiated by a component or function 24, the error protection module 28 receives a memory address and data, and calculates address protection information based on the address. The address protection information may include one or more address protection bits, or the address itself in some embodiments. The address protection information is then included with the data for calculation of data protection information. Since the data protection information in this case is based on both the data to be written to a storage location of the memory 22 and on address protection information which was calculated using an address of the storage location, this data protection information is hereinafter referred to primarily as combined address and data protection information.

The data and the combined address and data protection information thereby form an address protected data word which is output by the error protection module 28 through the memory interface 26 and written to the memory 22 at the given memory address.

Calculation of the address protection information and the combined address and data protection information may use virtually any error detection code. Error correction codes, which may also be used to implement the techniques disclosed herein, offer the additional advantage of correcting errors in the data and detecting errors in the address. In one embodiment, respective linear block codes are used to calculate the address protection information and the combined address and data protection information. It should be appreciated that other types of code may also be used, and that the same code may be used to calculate both the address protection information and the combined address and data protection information.

As described above, only data and the combined data and address protection information is stored in the memory 22, thus avoiding the additional memory space requirements associated with many conventional address protection techniques.

Turning now to a read operation, when a component or function 24 of the electronic device 20 initiates a read operation to retrieve information from a storage location in the memory 22, the address from which data is to be read is passed to the error protection module 28 on the address input 25. The error protection module 28 also receives, through the memory interface 26, data and combined address and data protection information from a storage location at a read address in the memory 22. The combined address and data protection information received from the memory 22 would have been calculated substantially as described above, based on the data and on address protection information, and the address protection information would have been calculated based on a write address to which the data was to be written.

In the absence of addressing errors during either the read operation or a preceding write operation, the read address will be the intended read address received on the address input 25, and the received data will be data which had been properly written at the intended read address.

In order to check for memory addressing errors, the error protection module 28 recalculates address protection information for the intended read address. The error protection system 28 combines the recalculated address protection information with the read data and combined address and data protection information, and determines if any errors are detected. If not, then the recalculated address protection information matches original address protection information which was calculated on the basis of a write address to which the data was to be written.

If an error is detected and an error-correcting code (ECC) is employed, the location of the error may be isolated to be within either the data or the address protection information. If the error is in the data, it can be corrected. If the error is in the address protection information, it can be determined that an addressing error has occurred.

When a memory addressing error is detected, the error protection module 28 may provide an error indication to the error handler(s) 29. An indication of any detected data errors may also be provided.

Although shown as a separate component in Fig. 2, address and/or data error handling functions of the error handler(s) 29 may be incorporated into the components or functions 24 which access the memory 22. Many different error handling operations will be apparent to those skilled in the art, including discarding read memory contents and retrying a memory read operation for instance.

Recovered data, which may be error-corrected if an ECC is used to calculate the combined address and data protection information, may also be output by the error protection system 28 to the component or function 24 which initiated the read operation. In one embodiment, the read data is output only if no addressing errors are detected.

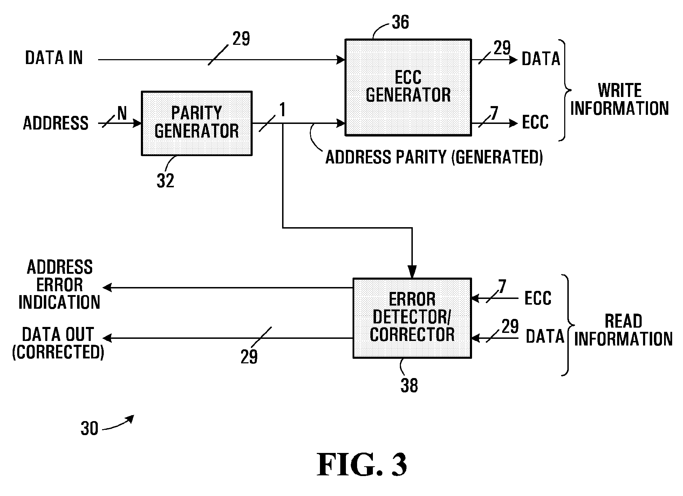

Fig. 3 is a block diagram of an error protection module according to an embodiment of the invention. The error protection module 30 implements the above example of using parity to generate address protection information and an ECC to generate combined address and data protection information. As noted above, however, the invention is in no way limited to these types of protection information, or to the particular number of data and protection information bits shown in Fig. 3.

The error protection module 30 includes a parity generator 32, an ECC generator 36, and an error detector/corrector 38. Various hardware- and software-based implementations of these components will be apparent to those skilled in the art.

In operation, 29-bits of data and an N-bit address of a memory location to which the data is to be written are received by the ECC generator 36 and the parity generator 32, respectively. The parity generator 32 calculates and outputs to the ECC generator 36 an address parity bit as the address protection information. The address parity bit is included in the calculation of combined data and address protection ECC bits by the ECC generator 36. The data and the combined address and data protection information, including 29 data bits and 7 ECC bits in the example of Fig. 3, are output from the ECC generator 36 for storage at the memory location associated with the received N-bit address.

According to one embodiment, the particular ECC used to calculate the combined address and data protection information can correct single bit errors and detect double bit errors in up to 63 bits. This extra error correction capacity may arise as a result of the size of data words used in a memory. For example, 6 ECC bits may have the capacity to protect data words of up to only 31 bits in length, including 25 data bits and the 6 ECC bits. Where a memory stores 36-bit data words, 7 ECC bits would be required. In the case of data-only protection, the 7 ECC bits are stored in the memory along with 29 data bits. However, 7 ECC bits can protect up to 63 bits, such that substantially the same level of data error protection may be provided by calculating ECC bits from a block of information having a length of 63 bits in this example. Therefore, with only 29 bits of actual data being stored in memory for each 36-bit data word, there is enough capacity to include up to 27 bits of address protection information in the calculation of the combined address and data protection ECC.

When a read operation is performed, the error detector/corrector 38 detects and in this case corrects errors in at least a portion of the read information, which includes 29 data bits and 7 ECC bits in Fig. 3. As noted above, errors in address protection information are detected, and data errors are preferably both detected and corrected.

The parity generator 32 recalculates an address parity bit based on an intended read address, and outputs the recalculated address parity bit to the error detector/corrector 38. The error detector/corrector 38 combines the recalculated address parity bit with the read data and the combined address and data protection information, and determines whether an error is detected in the recalculated address parity bit. If an error is detected in the recalculated address parity bit, then an address error indication is output by the error detector/corrector 38. Corrected read data is also output by the error detector/corrector 38, which may provide, in addition to corrected data, an indication of any data errors which were detected and corrected.

The error protection module 30 represents a particular example of using a parity code for address protection information and an ECC for combined address and data protection information. However, the addressing error protection mechanisms disclosed herein may use other types of code, including virtually any linear block code, such as an ECC, odd/even parity, bit-interleaved odd/even parity, diagonally-interleaved odd/even parity, cyclic redundancy checks, etc., to calculate address protection information, combined address and data protection information, or both. If a multi-bit address protection code is used, then a code used to calculate the combined address and data protection information preferably provides for detection of common address protection failures such as single-bit address faults. For example, if a single address bit fault causes multiple bits to change in the address protection information code, then a data protection code with multi-bit error detection capability would be preferred over a code which can perform only single-bit error detection and thus would not detect the address fault.

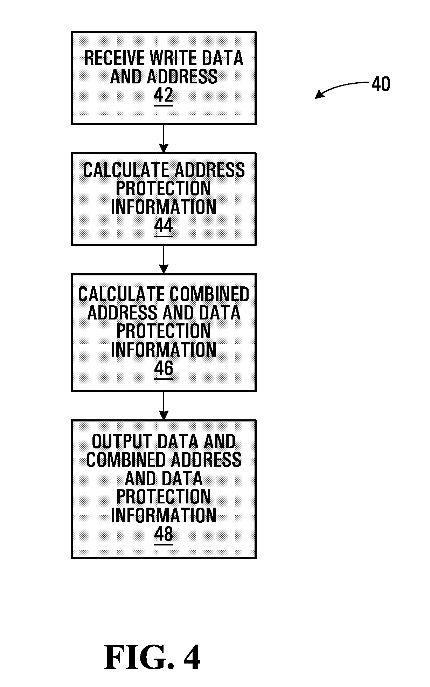

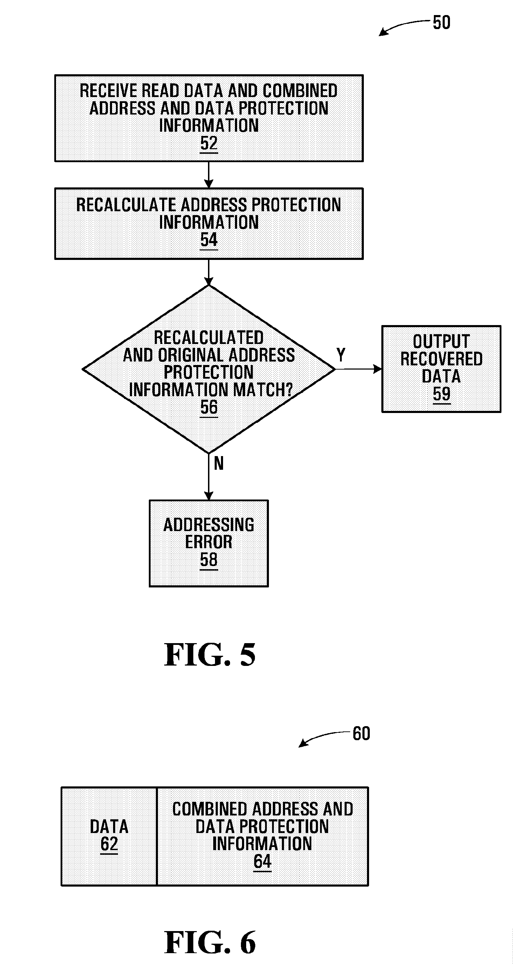

Embodiments of the invention have been described above primarily in the context of addressing error protection and detection systems. Figs. 4 and 5 are flow diagrams of methods in accordance with still further embodiments of the invention. The operations shown in Figs. 4 and 5 will be apparent from the foregoing system descriptions and therefore are described relatively briefly below. Various mechanisms for performing the operations shown in Figs. 4 and 5, as well as further operations which may be performed and other variations of the methods as shown, will also be apparent from the foregoing system descriptions.

Referring now to Fig. 4, a memory addressing error protection method 40 is shown. The method begins at 42, when data to be stored in a memory, and an address of a storage location in the memory in which the data is to be stored, are received. Based on the address, address protection information is calculated at 44. The address protection information is used along with the data to calculate combined address and data protection information at 46. At 48, the data and the combined address and data protection information are output for storage in the storage location.

Fig. 5 shows a memory addressing error detection method 50, which begins at 52 with an operation of receiving data and combined address and data protection information retrieved from a storage location at a read address in the memory. The combined address and data protection information were calculated as described above, based on the data and on original address protection information, which was calculated based on a write address of a storage location in the memory in which the data was to be written.

Address protection information is similarly recalculated at 54 based on an address of a storage location in a memory from which data is to be read. At 56, a determination is made, using the data, the recalculated address protection information, and the combined address and data protection information, as to whether the recalculated address protection information matches the original address protection information. If not, then an addressing error has occurred, as shown at 58. Otherwise, no addressing error has occurred and recovered data, in which errors may have been corrected where an ECC is used to calculate the combined address and data protection information, is output at 59.

According to another aspect of the invention, a data structure is provided. Fig. 6 is a block diagram of such a data structure according to one embodiment of the invention. The data structure 60 is stored in a machine-readable medium at a particular storage location having an address, and includes a data field 62 for storing data and a protection information field 64 for storing combined address and data protection information. The combined address and data protection information is calculated based on the data and on original address protection information which was calculated based on a write address of a storage location in the medium in which the data was to be written, as described above. The protection information in the field 64 thereby allows addressing errors to be detected by determining whether address protection information generated for the address matches the original address protection information.

Other data structures including the above fields in a different order and/or possibly additional fields will be apparent to those skilled in the art. It will also be apparent that the data structure 60 has not been drawn to any particular scale. The data field 62 is preferably larger than the protection field 64 in preferred embodiments, as in the case of the above example data word including 29 data bits and 7 ECC bits.

The addressing error protection and detection techniques as disclosed herein are widely applicable to electronic systems, and are particularly useful in highly reliable systems, such as telecommunications systems. As carriers strive to improve the availability of their systems to 5-9s capability and beyond, the ability to detect memory addressing errors will become more important. Furthermore, beyond immediate applicability to communications systems, embodiments of the invention have a wide applicability to digital electronic systems in general.

One primary advantage of the techniques disclosed herein is that memory addressing error protection is often provided at no additional memory cost. No additional memory, over that currently used for memory data protection using ECC for instance, is consumed.

What has been described is merely illustrative of the application of principles of the invention. Other arrangements and methods can be implemented by those skilled in the art without departing from the scope of the present invention.

For example, an electronic system may include many more than the single memory and electronic device shown in Fig. 1. Different types of electronic device and memory, as well as additional components, may also be provided in an electronic system, but have not been shown in order to avoid congestion in the drawing. Similarly, an electronic device may include many more components than those shown in Fig. 1. It should therefore be appreciated that the electronic system of Fig. 1, as well as the contents of the other drawings, are intended solely for illustrative purposes, and that the present invention is in no way limited to the particular example embodiments explicitly shown in the drawings and described herein.

Many different implementations of the techniques disclosed herein will also be apparent. These techniques may be implemented within an electronic device, as described above, or separately, such as in a memory manager which controls access to a memory, for instance. An electronic device may employ the above techniques for accessing internal memory devices, external memory devices, or both.

Read and write operations may also be implemented substantially independently, in that an electronic device may support only write operations, only read operations, or both. In an electronic system, more than one type of electronic device, with different memory access capabilities, may be provided. For instance, one electronic device in an electronic system may read data which was written to a memory, illustratively an Electrically Programmable Read Only Memory (EPROM), by a different electronic device, or potentially even a different electronic system. This situation may arise where the EPROM provides firmware or software such as an operating kernel or a game, respectively.

Just as an electronic system may include electronic devices of different types, an electronic system may include both address protected memory and unprotected memory. The above techniques may be used when addressing a protected memory, whereas conventional techniques may be used in conjunction with another memory in the same electronic system. Although it is expected that a single memory device would be either protected or unprotected, it is contemplated that addressing error protection may be provided on a per-storage location or block basis, with a memory device potentially including address protected storage locations as well as unprotected storage locations.

In addition, although described primarily in the context of methods and systems, other implementations of the invention are also contemplated, as instructions stored on a machine-readable medium, for example. Thus, the error protection module 28 (Fig. 2) may be implemented in hardware or in software for execution by a processor for instance.

## Claims

1. A memory addressing error protection system comprising:
a data input for receiving data to be stored in a memory and an address input for receiving an address of a storage location in the memory in which the data is to be stored; and
an error protection module, coupled to the data input and the address input, for calculating address protection information based on the address, calculating combined address and data protection information based on both the address protection information and the data, and outputting the data and the combined address and data protection information for storage in the storage location.

2. The memory addressing error protection system of claim 1, wherein the address protection information comprises the address.

3. The memory addressing error protection system of claim 1 or claim 2, wherein the error protection module calculates the address protection information and the combined address and data protection information using respective linear block codes.

4. The memory addressing error protection system of any one of claims 1 to 3, further comprising:
a memory interface for transferring information between the addressing error protection system and the memory,
wherein the error protection module is coupled to the memory interface and:
receives through the address input an address of a storage location in the memory from which data is to be read;
receives through the memory interface data and combined address and data protection information retrieved from a storage location at a read address in the memory, the combined address and data protection information having been calculated based on the data and on original address protection information, and the original address protection information having been calculated based on a write address of a storage location in the memory in which the data was to be written;
recalculates address protection information based on the address from which data is to be read; and
determines, using the received data and the combined address and data protection information, whether an addressing error has occurred based on whether the recalculated address protection information matches the original address protection information.

5. The memory addressing error protection system of claim 4, wherein the error protection module further outputs an error indication where an addressing error has occurred.

6. An electronic system comprising:
a memory; and
a plurality of electronic devices coupled to the memory and comprising:
at least one electronic device comprising the addressing error protection system of claim 1; and
at least one electronic device comprising:
an address input for receiving an address of a storage location in the memory from which data is to be read;
a memory interface for transferring information between the electronic device and the memory; and
an error protection module, coupled to the address input and the memory interface, for:
receiving through the address input an address from which data is to be read;
receiving through the memory interface data and combined address and data protection information retrieved from a storage location at a read address in the memory, the combined address and data protection information having been calculated based on the data and on original address protection information, and the original address protection information having been calculated based on a write address of a storage location in the memory in which the data was to be written;
recalculating address protection information based on the address from which data is to be read; and
determining, using the received data and the combined address and data protection information, whether an addressing error has occurred based on whether the recalculated address protection information matches the original address protection information.

7. A memory addressing error protection method comprising:
receiving data to be stored in a memory and an address of a storage location in the memory in which the data is to be stored;
calculating address protection information based on the address;
calculating combined address and data protection information based on both the address protection information and the data; and
outputting the data and the combined address and data protection information for storage in the storage location.

8. The method of claim 7, wherein calculating address protection information comprises using a parity code, and wherein calculating combined address and data protection information comprises using an error correcting code (ECC).

9. The method of claim 7 or claim 8, further comprising:
receiving an address of a storage location in the memory from which data is to be read;
receiving data and combined address and data protection information retrieved from a storage location at a read address in the memory, the combined address and data protection information having been calculated based on the data and on original address protection information, and the original address protection information having been calculated based on a write address of a storage location in the memory in which the data was to be written;
recalculating address protection information based on the address from which data is to be read; and
determining, using the received data and the combined address and data protection information, whether an addressing error has occurred based on whether the recalculated address protection information matches the original address protection information.

10. The method of claim 9, further comprising:
providing an error indication where an addressing error has occurred.

11. The method of claim 9 or claim 10, implemented in an electronic system comprising a memory and a plurality of electronic devices, wherein:
the operations of receiving data to be stored in a memory and an address of a storage location in the memory in which the data is to be stored, calculating address protection information, calculating combined address and data protection information, and outputting the data and the combined address and data protection information are implemented in each of at least one of the plurality of electronic devices; and
the operations of receiving an address of a storage location in the memory from which data is to be read, receiving data and combined address and data protection information, recalculating address protection information, and determining whether an addressing error has occurred are implemented in each of at least one other electronic device of the plurality of electronic devices.

12. A memory addressing error detection system comprising:
a memory interface for transferring information between the addressing error detection system and a memory;
an address input for receiving an address of a storage location in the memory from which data is to be read; and
an error protection module, coupled to the address input and the memory interface, for:
receiving through the address input an address of a storage location in the memory from which data is to be read;
receiving through the memory interface data and combined address and data protection information retrieved from a storage location at a read address in the memory, the combined address and data protection information having been calculated based on the data and on original address protection information, and the original address protection information having been calculated based on a write address of a storage location in the memory in which the data was to be written;
recalculating address protection information based on the address from which data is to be read; and
determining, using the received data and the combined address and data protection information, whether an addressing error has occurred based on whether the recalculated address protection information matches the original address protection information.

13. The memory addressing error detection system of claim 12, wherein the original address protection information and the combined address and data protection information were calculated using respective linear block codes.

14. The memory addressing error detection system of claim 12 or claim 13, wherein the error protection module further outputs an error indication where an addressing error has occurred.

15. The memory addressing error detection system of any one of claims 12 to 14, wherein the error protection module further receives through a data input data to be stored in the memory and receives through the address input an address of a storage location in the memory in which the data is to be stored, calculates address protection information based on the address, calculates combined address and data protection information based on both the address protection information and the data, and outputs the data and the combined address and data protection information for storage in the storage location.

16. An electronic system comprising:
a memory; and
at least one of:
an electronic device coupled to the memory and comprising the memory addressing error detection system of claim 12;
an electronic device coupled to the memory and comprising:
a data input for receiving data to be stored in the memory and an address input for receiving an address of a storage location in the memory in which the data is to be stored;
an error protection module, coupled to the data input and the address input, for calculating address protection information based on the address, calculating combined address and data protection information based on both the address protection information and the data, and outputting the data and the combined address and data protection information for storage in the storage location; and
an electronic device coupled to the memory and comprising:
the memory addressing error protection system of claim 12, wherein the error protection module further receives through a data input data to be stored in the memory and receives through the address input an address of a storage location in the memory in which the data is to be stored, calculates address protection information based on the address, calculates combined address and data protection information based on both the address protection information and the data, and outputs the data and the combined address and data protection information for storage in the storage location.

17. A memory addressing error detection method comprising:
receiving an address of a storage location in a memory from which data is to be read;
receiving data and combined address and data protection information retrieved from a storage location at a read address in the memory, the combined address and data protection information having been calculated based on the data and on original address protection information, and the original address protection information having been calculated based on a write address of a storage location in the memory in which the data was to be written;
recalculating address protection information based on the address from which data is to be read; and
determining, using the received data and the combined address and data protection information, whether an addressing error has occurred based on whether the recalculated address protection information matches the original address protection information.

18. The method of claim 17, further comprising:
providing an error indication where an addressing error has occurred.

19. The method of claim 17 or claim 18, further comprising:
receiving data to be stored in the memory and an address of a storage location in the memory in which the data is to be stored;
calculating address protection information based on the address;
calculating combined address and data protection information based on both the address protection information and the data; and
outputting the data and the combined address and data protection information for storage in the storage location.

20. A machine-readable medium storing, at a storage location having an address, a data structure comprising:
a data field storing data; and
a protection information field storing combined address and data protection information, the combined address and data protection information having been calculated based on the data and on original address protection information, and the original address protection information having been calculated based on a write address of a storage location in the medium in which the data was to be written,
the protection information field enabling detection of an addressing error by determining whether address protection information generated for the address matches the original address protection information.
